# EUROPÄISCHE PATENTSCHRIFT

(11) **EP 3 286 473 B1**
(45) Veröffentlichungstag und Bekanntmachung des Hinweises auf die Patenterteilung: **12.02.2020**
(21) Anmeldenummer: 16721077.2
(22) Anmeldetag: 19.04.2016
(51) Int. Cl.: F16L 25/00, B60S 1/52, F16L 33/34, B60S 1/48, F16L 55/07, F16L 33/18

(54) **ANSCHLUSSSTÜCK ZUM VERBINDEN EINES OBERFLÄCHENSTRUKTURIERTEN, MINDESTENS EINES VERTIEFUNG IN SEINER OBERFLÄCHE AUFWEISENDEN ENDES EINES SICH ENTLANG EINER LÄNGSRICHTUNG ERSTRECKENDEN SCHLAUCHS MIT EINEM FLUIDAUSLASS; SYSTEM MIT EINEM SOLCHEN ANSCHLUSSSTÜCK UND VERWENDUNG FÜR EIN SOLCHES ANSCHLUSSSTÜCK**
CONNECTION PIECE FOR CONNECTING A SURFACE-STRUCTURED END OF A HOSE EXTENDING IN A LONGITUDINAL DIRECTION, SAID END HAVING AT LEAST ONE RECESS IN THE SURFACE OF SAID END, TO A FLUID OUTLET; SYSTEM HAVING SUCH A CONNECTION PIECE; AND USE FOR SUCH A CONNECTION PIECE
PIÈCE DE RACCORDEMENT SERVANT À RELIER UNE EXTRÉMITÉ, DONT LA SURFACE EST STRUCTURÉE ET QUI COMPORTE AU MOINS UN RENFONCEMENT À SA SURFACE, D'UN TUYAU FLEXIBLE S'ÉTENDANT LE LONG D'UNE DIRECTION LONGITUDINALE À UNE SORTIE DE FLUIDE ; SYSTÈME ÉQUIPÉ D'UNE PIÈCE DE RACCORDEMENT DE CE TYPE ET UTILISATION D'UNE PIÈCE DE RACCORDEMENT DE CE TYPE

(30) Priorität: 20.04.2015 DE 202015002815 U; 21.04.2015 DE 202015002874 U
(43) Veröffentlichungstag der Anmeldung: 28.02.2018
(73) Patentinhaber: A. Raymond et Cie, 38000 Grenoble (FR)
(72) Erfinder: ZIMMER, Jochen, 79733 Görwihl (DE); BÖHLER, Patrick, 79540 Lörrach (DE); BODE, Karl, 79540 Lörrach (DE); REINACHER, Armin, 79576 Weil am Rhein (DE)
(74) Vertreter: Tilmann, Max Wilhelm
(86) Internationale Anmeldenummer: PCT/EP2016/000636
(87) Internationale Veröffentlichungsnummer: WO 2016/169648

(56) Entgegenhaltungen:
- EP-A2- 2 025 987
- WO-A1-2008/131993
- WO-A1-2011/095300

## Beschreibung

Die Erfindung betrifft ein Anschlussstück zum Verbinden eines oberflächenstrukturierten, mindestens eine Vertiefung in seiner Oberfläche aufweisenden Endes eines sich entlang einer Längsrichtung erstreckenden Schlauchs mit einem Fluidauslass, ein System mit einem solchen Anschlussstück und die Verwendung für ein solches Anschlussstück.

Aus dem Stand der Technik ist es bekannt, das Ende eines Schlauchs über ein Anschlussstück mit einem Fluidauslass, beispielsweise einem Scheibenwaschdüsenelement zu verbinden.

In Fahrzeugen werden an verschiedenen Orten Verbindungen benötigt, die Fluid führende Bauteile verbinden. Zum einen wird die Verbindung von Schläuchen über Klemm/Schraubverbindung erreicht. Zum anderen finden Schlauchkupplungen und Schnellverbinder Anwendung. Die Biegsamkeit von Schläuchen macht eine unlösbare Verbindung schwierig. Insbesondere macht die Flexibilität von Schläuchen eine kraftschlüssige und dichtende Verbindung schwierig.

Zur fluidischen Verbindung von Waschwasseranwendungen im Fahrzeug finden Gummi- oder Wellschläuche Anwendung. Anwendungsspezifisch sind die Verbindungen so auszulegen, dass die erforderlichen Drücke aufgenommen werden können. Kritisch sind dabei im Besonderen die Anschlussbereiche von Schlauch und Anschlussstück.

Soll auf Schellen zur Befestigung aus Kosten- und optischen Gründen verzichtet werden, muss der Schlauch mit erheblicher Vorspannung auf die Anschlussstücke aufgezogen werden und das Material muss so gewählt sein, dass diese Spannung durch das Kriechverhalten des Materials nicht erheblich über die Lebenszeit nachlässt. Ist dies nicht gewährleistet, so ist die Dichtfunktion gefährdet.

Daher kommen beim Stand der Technik teure Materialien zum Einsatz. Beispielsweise sind dies Gummischläuche oder relativ dickwandige EPDM-Schläuche.

Aus dem Stand der Technik sind verschiedene Verbindungstechniken bekannt, um ein Rohr mit einem anderen Rohr oder einem Anschlussstück zu verbinden.

Die FR 2 153 947 zeigt die kraftschlüssige Verbindung von zwei Rohren mittels einer Klebeverbindung. Beide Rohrenden weisen eine glockenförmige Form der Wandung von unterschiedlichem Querschnitt auf. Zwischen diesen Wandungen wird ein Klebstoff eingefüllt, so dass eine gut abdichtende Verbindung von zwei Rohren möglich ist. Dabei ist jedoch die Anordnung von Dichtelementen zwischen den Wandungen zwingend erforderlich, die ein Ausfließen des Klebstoffes vor dem Aushärten verhindern.

Die DE 25 12 033 B1 zeigt das Einbringen eines Pulvers in den Verbindungsbereich zwischen zwei mit Kunststoff beschichteten Rohrleitungen aus Metall. Durch Erhitzen wird das Pulver flüssig, so dass ein Verschmelzen zwischen den Kunststoffbeschichtungen der Rohre und dem Pulver erfolgt. Die ausgewählten Materialien müssen dabei die relativ hohen Temperaturen aushalten, die notwendig sind um das Kunststoffpulver zu schmelzen.

Aus dem Stand der Technik ist die Verwendung von festen Klebeeinlagen bei Anschlussstücken bekannt. Die FR 2727347 zeigt die Verbindung von zwei Wellschläuchen. Dabei wird ausgeführt, dass die Wellentäler mit Kunststoffkernen gefüllt werden, welche durch Erhitzen eine stoffschlüssige Schweißverbindung zwischen der umgebenden Muffe und den beiden Schläuchen eingehen, wodurch eine dichte Verbindung hergestellt wird.

EP 2 025 987 A2 offenbart ein Anschluss- oder Verbindungsteil für eine Wellrohr- oder Wellschlauchleitung. Es wird beschrieben, dass ein Formteil durch Urformen mit dem Leitungsende eines Wellrohres verbunden oder ein vorbereitetes Anschlussteil mit dem Leitungsende eines Wellrohres durch eine Muffe verbunden werden kann. Im letztgenannten Falle wird die Muffe durch Urformen erzeugt.

WO 2011/095300 A1 offenbart eine Spritzdüsenanordnung einer Scheibenreinigungsanlage eines Fahrzeuges. Es wird beschrieben, die Anzahl der Fertigungsschritte zu verringern. Die Komplexität des Fertigungsprozesses könne noch weiter verringert werden, wenn ein Düsengrundkörper einstückig mit einer Flüssigkeitsleitung ausgebildet werde. Die Flüssigkeitsleitung könne insbesondere als Wellrohr mit einer aus dem Wellrohr einstückig ausgeformten Mündung ausgebildet sein. Derartige Wellrohre könnten mittels eines Extrusionsverfahrens hergestellt werden. Das Extrusionsverfahren erlaube es auch, über einen vorzugsweise unmittelbar, nachfolgenden Thermoformschritt unter Verwendung von Vakuum und/oder Druck nach der Extrusion und im Zuge der Wellrohrformung den Abzweig bzw. die Mündung einstückig mit der Flüssigkeitsleitung auszuformen.

Das Verbinden von Wellschläuchen miteinander oder das Befestigen an einem Anschlussstück durch Verkleben mit adhäsiven Klebstoffen oder durch Verschweißen von Klebstoffen mit den Bauteilen ist grundsätzlich unerwünscht, weil adhäsiver Klebstoff den Wellschlauch in seiner Festigkeit angreift bzw. Wellschläuche nur geringen thermischen Behandlungen ausgesetzt werden können.

Aus dem Stand der Technik ist weiterhin auch die Verwendung von Wellschläuchen als Stecksystem bekannt. Die Wellschläuche sind im Bereich des Anschlusses mit sogenannten Glattrohrenden ausgestattet. Diese Glattrohrenden werden auf die wellige bzw. stufige Oberfläche der Anschlussstücke unter großer Kraftaufwendung aufgepresst. Die glatte Oberfläche des Schlauches passt sich der welligen bzw. stufigen Oberfläche des Anschlusses an. Aufgrund der formschlüssigen Oberflächenberührung wird eine gute Dichtwirkung erzielt. Diesen Vorgang zu automatisieren ist gleichzeitig aufwendig und teuer. Gleichzeitig können nur derartige Materialien verwendet werden, die eine gute Kriechfestigkeit aufweisen. Die Auswahl an Schlauchmaterialien ist somit eingeschränkt. Den Wellschlauch ohne ein Glattrohrende auf ein Anschlussstück aufzupressen liefert, aufgrund der Geometrie, keine ausreichende Abdichtung.

Die Glattrohrenden stellen in Bezug auf variable Nutzbarkeit eines Schlauchtyps für verschiedene Produkte, aufgrund der bei der Herstellung eines Schlauches festgelegten Längen, ein Problem dar. Durch den bei Bestellung festgelegten Abstand der Glatt-Bereiche zueinander ergeben sich auch die nicht änderbaren Längen an Wellschlauch zwischen zu verbindenden Punkten. Bezüglich einer vollautomatischen Verarbeitung der Schläuche mit mehreren Schlauchstücken muss für jede auftretende Verbindungslänge ein eigener Schlauchtyp mit spezifischer Well- Glatt-Teilung zugeführt werden. Dies ist kostenseitig häufig kaum darstellbar. Oder es wird ein langer Schlauch verwendet, der je nach Einsatzart eine zu große Länge aufweist, so dass der zwischen zwei Anschlussstücken vorhandene aber nicht benötigte Schlauch irgendwie im Auto verlegt und befestigt werden muss. Dies führt zu einem unnötigen Gewicht und bedingt einen hohen Montageaufwand. Aufgrund dieser Umstände wird bisher auf die deutlich teureren und letztlich auch schwereren Gummischläuche ausgewichen.

Gerade die Gewichtseinsparung gewinnt im Fahrzeugbau zunehmend an Bedeutung.

Vor diesem Hintergrund liegt der Erfindung die Aufgabe zugrunde, eine fluidische Verbindung zwischen einem oberflächenstrukturierten Schlauch und einem Fluidauslass zu schaffen, die einfach in der Handhabung ist.

Die Aufgabe wird mit dem Gegenstand der nebengeordneten Ansprüche gelöst. Vorteilhafte Ausführungsformen sind in den Unteransprüchen wiedergegeben.

Kern der Erfindung ist der Gedanke, bei einem oberflächenstrukturierten Schlauch diese Oberflächenstruktur für eine Fixierung des Schlauchs an dem Anschlussstück zu verwenden. Dabei kommt ein Vergussmaterial zum Einsatz, das
- in einem ersten Verarbeitungszustand hinreichend fluidisierbar ist, damit ein Teil des im Vergussraum befindlichen Vergussmaterials bei eingeschobenen Ende des Schlauchs in die Vertiefung fließen kann, und
- in einem zweiten Verarbeitungszustand dauerhaft ausgehärtet ist, damit der in die Vertiefung eingeflossene Teil des Vergussmaterials und der übrige Teil des Vergussmaterials das Ende des Schlauchs durch das Eingreifen des Vergussmaterials in die Vertiefung formschlüssig gegen entlang der Längsachse des Schlauchs wirkende Zugkräfte in dem Vergussraum zurückhalten können.

Der in die Vertiefung eingeflossene Teil härtet zusammen mit dem übrigen Teil des Vergussmaterials aus. Das ausgehärtete Vergussmaterial bildet dadurch einen Grundkörper aus, von dem sich aus Vorsprünge in die Vertiefungen hinein erstrecken (der in die Vertiefung eingeflossene Teil nach dem Aushärten). Diese Vorsprünge stehen einer Bewegung des Ende des Schlauchs entlang der Längsachse des Schlauchs im Weg und halten das Ende des Schlauchs somit durch Formschluss zurück. Es steht zu erwarten, dass der Formschluss der überwiegende Grund für das Zurückhalten des Endes des Schlauchs gegen entlang der Längsachse des Schlauchs wirkende Zugkräfte ist. Es ist denkbar, dass die durch den Formschluss erzielte Wirkung durch einen Kraftschluss oder einen Stoffschluss unterstützt wird. Je nach geometrischer Ausbildung der Vertiefung ist es möglich, dass die Vertiefung Flächenabschnitte aufweist, die nicht senkrecht zur Längsachse des Schlauchs stehen, und dass das ausgehärtete Vergussmaterial an seinem in der Vertiefung befindlichem Teil korrespondierende Flächenabschnitte aufweist, die nicht senkrecht zur Längsachse. Zwischen diesen Flächenabschnitten kann es zu einem Kraftschluss kommen, der die Rückhaltewirkung des Formschlusses unterstützt. Ergänzend oder alternativ ist es denkbar, dass es zwischen Oberflächenabschnitten des Vergussmaterials in der Vertiefung und Oberflächenabschnitten des die Vertiefung bildenden Teils der Oberfläche des Ende des Schlauchs zu Anhaftungen, ggf. sogar zu einem ausgeprägten Stoffschluss kommt. Auch dieser würde die durch den Formschluss erzielte Wirkung des Zurückhaltens unterstützen.

Dabei geht das Vergussmaterial in einer besonders bevorzugten Ausführungsform keine Reaktion mit der Oberfläche des Schlauchs (auch nicht mit dem die Vertiefung begrenzenden Teil der Oberfläche des Schlauchs) ein. In einer besonders bevorzugten Ausführungsform des erfindungsgemäßen Systems greift ein Teil des ausgehärteten Vergussmaterials in die Vertiefung an der Oberfläche des Schlauchs ein und hält allein aufgrund des dadurch entstehenden Formschlusses zwischen dem ausgehärteten Vergussmaterial und dem Ende des Schlauchs das Ende des Schlauchs in dem Vergussraum zurück.

Der Begriff "oberflächenstrukturierter Schlauch" umfasst im Sinne der Erfindung einen Schlauch, der zumindest eine Vertiefung in der Oberfläche des Endes des Schlauchs aufweist. Die Vertiefung kann sich über einen Teilumfang des Schlauchs erstrecken, insbesondere bevorzugt erstreckt sie sich jedoch zumindest einmal um den Umfang des Endes des Schlauches. Es können insbesondere mehrere Vertiefungen an der Außenseite des Schlauches vorgesehen sein.

Der Begriff "Vergussmaterial" umfasst im Sinne der Erfindung sowohl flüssiges, also vergießbares Material, als auch pulverförmiges bzw. granulatförmiges, aber auch pastöses Material, welches in eine Vergusskammer eingefüllt werden kann, fluidisierbar ist und ausgehärtet werden kann. In einer bevorzugten Ausführungsform ist das Vergussmaterial ein aushärtbares Material, welches vor dem Aushärten flüssig oder pulverförmig ist. Hierdurch kann die Handhabung vereinfacht sein. Der Begriff "Aushärten" umfasst im Sinne der Erfindung, dass flüssiges Vergussmaterial aushärtet oder pulverförmiges Vergussmaterial nach einem Verflüssigen erhärtet oder geschmolzen wird und danach erhärtet.

Als "fluidisierbar" wird ein Vergussmaterial verstanden, dass entweder in dem Verarbeitungszustand bereits flüssig oder schüttfähig ist, um in die Vertiefung des Endes des Schlauchs zu fließen, oder Vergussmaterial, dass unter zu Hilfenahme von Trägerfluiden, wie beispielsweise Luft in die Vertiefung eingebracht werden kann.

In einer bevorzugten Ausführungsform ist das Vergussmaterial ein Material, das keine Adhäsion mit dem Vergussraum und/oder dem Schlauch eingeht, da es bei einer Adhäsion zu einer Beeinträchtigung des Schlauchs und/oder des Vergussraums kommen kann.

Die Erfindung weist verschiedene Vorteile gegenüber dem Stand der Technik auf. Zum einen kann das Gewicht aufgrund der optimierten Länge der Schlauchlänge optimiert werden. Weiterhin kann die Verwendung eines Schlauches vorgesehen werden, dessen Wanddicke nur aufgrund des Drucks ausgewählt werden muss und nicht aufgrund der Kriechfestigkeit. Hierdurch wird ein geringeres Gewicht für z.B. Schlauchketten erreicht bei gleichzeitig niedrigeren Anforderungen an die Materialeigenschaften. Es können preiswertere Materialien ausgewählt werden und es können sogar recycelbare Materialien eingesetzt werden. Da der Schlauch keine speziellen Enden benötigt kann die Verwendung insbesondere von dem gleichen Endloswellschlauch für unterschiedliche Verbindungslängen erfolgen, wobei der Schlauch bei der Verbindung in die passende Länge geschnitten wird.

Die formschlüssige Verbindung von Schlauch und Anschlussstück durch ein Vergussmaterial liefert eine besonders hohe Festigkeit der Verbindung. Versuche haben gezeigt, dass nach dem Aushärten des Vergussmaterials eine unlösbare und dichte Verbindung zwischen Schlauch und Anschlussstück entstanden ist. Die für das Dichten eigentlich ungünstige Wellgeometrie erweist sich dabei durch ihre Hinterschnittfunktion als günstiges Halteelement. Gleichzeitig hat es sich gezeigt, dass die vergossene Verbindungsstelle eine höhere mechanische Festigkeit besitzt als der Schlauch selbst.

Das Anschlussstück wird darüber hinaus mit keiner mechanischen Belastung durch die Befestigung des Schlauches am Anschlussstück beaufschlagt. Dies ist möglich aufgrund der weitgehend kraftlosen Montage des Schlauches. Die Verbindung weist somit keine Alterungserscheinungen auf, die aufgrund von aufgeprägten Montagekräften hervorgerufen werden.

In einer bevorzugten Ausführungsform weist der Vergussraum zumindest eine Einführöffnung für den Schlauch auf. Hierdurch kann ein definierter Bereich für das Einführen des Schlauchs geschaffen werden. Die Einführöffnung kann beispielsweise in Form eines zum Vergussraum führenden Einführhohlzylinders ausgeführt sein, in den das Ende des Schlauchs eingeführt wird und der insbesondere einen Überstand des Vergussraumes ausbilden kann, um beispielsweise einen größeren Bereich der Oberflächenstruktur des Schlauches mit Vergussmaterial zu umgeben. Der Begriff "Einführhohlzylinder" wird in dieser Beschreibung stellvertretend für andere mögliche Ausführungsformen der Einführöffnung, durch die das Schlauchende in den Vergussraum geführt werden kann, verwendet. Als "Einführhohlzylinder" wird insbesondere ein hülsenförmig ausgebildetes, sich von den den Vergussraum bildenden Wänden forterstreckendes Element verstanden. Dies wird insbesondere dann eingesetzt werden, wenn die den Vergussraum bildenden Wände mit geringer Wandstärke ausgeführt werden. Es sind aber auch Ausführungsformen denkbar, bei denen der Vergussraum innerhalb eines komplexeren Gebildes ausgebildet ist und der "Einführhohlzylinder" beispielsweise als der Teil einer dickeren, den Vergussraum teilweise begrenzenden Wand verstanden wird, durch den ein Kanal führt, durch den das Schlauchende in den Vergussraum eingeführt werden kann.

In einer bevorzugten Ausführungsform umfasst der Vergussraum eine Anlagefläche für das Vergussmaterial, mit der ein Formschluss zwischen Vergussmaterial und Vergussraum erreicht werden kann, der das Vergussmaterial im Vergussraum gegen eine entlang der Längsachse des Schlauchs wirkende Zugkraft zurückhält. Die Anlagefläche weist eine Flächennormale auf, die mit der Einschubrichtung des Endes des Schlauchs (Längsachse des Einführhohlzylinders) in den Vergussraum einen Winkel von ungefähr 0° bis ungefähr 45° einschließt. Hierdurch wird eine Anlagefläche geschaffen, die effektiv beim Ausbilden des Formschlusses ist. Es kann auch vorgesehen sein, dass der Winkel zwischen ungefähr 0° und ungefähr 40°, insbesondere zwischen ungefähr 0° und ungefähr 30°, mehr bevorzugt zwischen ungefähr 0° und ungefähr 20°, insbesondere bevorzugt zwischen ungefähr 0° und 10° ist. Die Anlagefläche kann an der Wandung mit der Einführöffnung ausgebildet sein, es kann aber auch vorgesehen sein, dass die Anlagefläche im Inneren des Vergussraums vorliegt.

In einer bevorzugten Ausführungsform ist das Vergussmaterial derart ausgebildet, dass das Vergussmaterial die Verbindung zwischen Schlauch und Anschlussstück fluidisch abdichtet, und insbesondere das Vergussmaterial insbesondere am Stirnbereich des Schlauchs anliegt. Hierdurch wird eine einfache Abdichtung geschaffen. Es kann auch vorgesehen sein, dass der Schlauch stirnseitig in eine Vertiefung eingreift. Wichtig in diesem Zusammenhang kann dann sein, dass der Bereich um das Ende des Schlauchs vom Vergussmaterial umgeben ist, um eine komplette fluidische Abdichtung zu erzielen.

Das erfindungsgemäße Anschlussstück kann ein zentrales Element aufweisen, an dem der Hohlzylinder ausgebildet ist, auf den das Ende des Schlauchs in einer bevorzugten Ausführungsform aufgeschoben werden kann. Insbesondere bevorzugt ist der Fluidauslass an dem zentralen Element ausgebildet. Aus dem Stand der Technik der Scheibenwaschwasserleitungen ist ein Steckelement bekannt, das einen Hohlzylinder aufweisen, auf den ein Schlauchende einer Scheibenwaschwasserleitung aufgeschoben werden kann. Teilweise sind diese Steckelemente als "T-Stücke" ausgebildet und weisen zwei gegenüberliegende Hohlzylinder auf, auf die ein Schlauchende jeweils einer Scheibenwaschwasserleitung geschoben werde kann, um eine Düsenkette zu bilden, wobei am Steckelement ferner eine Düse vorgesehen sein kann. Derartige Steckelemente können als zentrales Element in dem erfindungsgemäßen Anschlussstück eingesetzt werden. Die Erfindung ermöglicht es demnach, ein aus dem Stand der Technik bekanntes Steckelement mit einer Einhausung zu umgeben, in der der Vergussraum so ausgebildet ist, dass sich das Steckelement mit Ausnahme des Düsenauslass in dem Vergussraum befindet.

In einer bevorzugten Ausführungsform ist ein in dem Vergussraum angeordneter Hohlzylinder vorgesehen, auf den das Ende des Schlauches aufschiebbar ist, wobei der Hohlzylinder einen endseits offenen Fluidkanal aufweist, der mit dem Fluidauslass verbunden ist. In dem das Ende auf den Hohlzylinder aufgeschoben werden kann, wird das Ende des Schlauchs während des Einbringens der Vergussmasse in die Vertiefung des Schlauchs unterstützt. Das erlaubt ein präziseres Einbringen der Vergussmasse in die Vertiefung des Schlauchs. Der Hohlzylinder kann ein Hohlkegelstumpf sein, um das Aufschieben des Endes von dem Schlauch zu vereinfachen.

In einer bevorzugten Ausführungsform ist das Ende des Schlauchs, bzw. der Vergussraum fluidisch mittels eines Kanals mit einem Scheibenwaschdüsenelement verbunden. Insbesondere kann der Fluidkanal in dem Hohlzylinder innerhalb des Vergussraumes mit dem Scheibenwaschdüsenelement verbunden sein, durch die ein Fluid austreten kann. Hierdurch kann eine zusätzliche Funktionalität integriert werden.

In einer bevorzugten Ausführungsform weist der Vergussraum eine Einfüllöffnung auf, die offen ist. In einer alternativen Ausführungsform weist der Vergussraum eine Einfüllöffnung auf, die durch einen Deckel verschlossen ist. Eine große Öffnung bzw. eine Öffnung ohne einen Überstand ermöglicht ein einfacheres Einfüllen des Vergussmaterials in den Vergussraum. Das Einfüllen durch einen automatisierten Prozess ist möglich.

In einer bevorzugten Ausführungsform sind die Einführöffnung und die Einfüllöffnung in einem Winkel zueinander angeordnet, der insbesondere im Bereich von ungefähr 50° bis ungefähr 130° liegen kann. Hierdurch kann der Schlauch an einer anderen Seite des Vergussraums eingeführt werden, als Vergussmaterial in den Vergussraum eingefüllt werden kann.

In einer bevorzugten Ausführungsform weist das Anschlussstück eine erste Einführöffnung, über die ein Ende eines ersten Schlauchs in den Vergussraum eingeführt werden kann, und eine zweite Einführöffnung, über die ein Ende eines zweiten Schlauchs in den Vergussraum eingeführt werden kann. Hierdurch kann in Einsatzgebiet von Scheibenwascheinrichtungen eine Düsenkette aufgebaut werden, um beispielweise mehrere Düsen für eine Scheibenwascheinrichtung nacheinander anzuordnen. Beide Einführöffnungen können als Einführhohlzylinder ausgebildet sein.

In einer bevorzugten Ausführungsform sind die Einführöffnungen seitlich zur Einfüllöffnung angeordnet, wobei jeder Schlauch jeweils an einer anderen Seite des Vergussraumes eingeführt wird. Vorteilhafterweise ist die Anordnung der Einführöffnungen bei zwei Schläuchen derart, dass die Einführöffnungen an gegenüberliegenden Seiten des Vergussraumes ausgebildet sind. Hierdurch kann eine lineare Anordnung erreicht werden. Das Bauvolumen kann minimiert werden und auch die Länge bei Verbindung mehrerer Vorrichtungen zu einer Kette kann aufgrund der linearen Anordnung der Schläuche optimiert werden.

Das erfindungsgemäße Anschlussstück stellt für sich genommen bereits ein verkaufsfähiges Gut dar. Dritte, die in Besitz eines Schlauchs, insbesondere bevorzugt eines Wellschlauchs sind, bzw. die diesen leicht beschaffen können, können unter Hinzunahme des erfindungsgemäßen Anschlussstücks die Vorteile der Erfindung realisieren.

Die Erfindung schafft auch ein System aus einem erfindungsgemäßen Anschlussstück und einem eine Vertiefung in seiner Oberfläche aufweisenden Endes eines sich entlang einer Längsrichtung erstreckenden Schlauchs. In dem System ist die Vergussmasse ausgehärtet und der in die Vertiefung eingeflossene Teil des Vergussmaterials und der übrige Teil des Vergussmaterials halten das Ende des Schlauchs formschlüssig gegen entlang der Längsachse des Schlauchs wirkende Zugkräfte in dem Vergussraum zurück, wobei der Schlauch am Anschlussstück fixiert ist.

In einer bevorzugten Ausführungsform umgibt das Vergussmaterial den in den Vergussraum eingeführten Teil des Endes des Schlauchs vollständig. Es sind Ausführungsformen denkbar, bei denen das Vergussmaterial nur einen Umfangsabschnitt des in den Vergussraum eingeführten Teils des Endes des Schlauchs umgibt. Die formschlüssige Verbindung zwischen Vergussmaterial und Schlauch wird jedoch verbessert, wenn das Vergussmaterial den in den Vergussraum eingeführten Teil des Endes des Schlauchs vollständig umgibt.

In einer bevorzugten Ausführungsform sind am Schlauch mehrere Vertiefungen als parallele ringförmige Vertiefungen ausgebildet. In einer bevorzugten Ausführungsform ist im Vergussraum eine Mehrzahl von Vertiefungen, insbesondere mehr als zwei, insbesondere bevorzugt mehr als drei angeordnet. In einer bevorzugten Ausführungsform sind im Vergussraum weniger als zehn Vertiefungen angeordnet. In einer bevorzugten Ausführungsform ist im Einführholzylinder eine Mehrzahl von Vertiefungen, insbesondere mehr als zwei, insbesondere bevorzugt mehr als drei angeordnet. In einer bevorzugten Ausführungsform sind im Einführhohlzylinder weniger als zehn Vertiefungen angeordnet.

In einer bevorzugten Ausführungsform ist die Vertiefung als spiralförmige Vertiefung ausgebildet. In einer bevorzugten Ausführungsform ist im Vergussraum eine Mehrzahl von Windungen der spiralförmigen Vertiefung, insbesondere mehr als zwei, insbesondere bevorzugt mehr als drei Windungen angeordnet. In einer bevorzugten Ausführungsform sind im Vergussraum weniger als zehn Windungen angeordnet. In einer bevorzugten Ausführungsform ist im Einführholzylinder eine Mehrzahl von Windungen der Vertiefung, insbesondere mehr als zwei, insbesondere bevorzugt mehr als drei Windungen angeordnet. In einer bevorzugten Ausführungsform sind im Einführhohlzylinder weniger als zehn Windungen angeordnet.

In einer bevorzugten Ausführungsform ist der Schlauch ein Wellschlauch, wodurch eine einfache Ausgestaltung ermöglicht ist.

In einer bevorzugten Ausführungsform weist ein Teil des Schlauches einen unflexiblen Rohrbereich auf. Derartige Rohre können ggf. einfacher befestigt werden und weisen andere Festigkeiten auf als flexible Schlauchbereiche.

In einer Ausführungsform können ein Schlauch und ein Anschlussstück derart verbunden sein, dass der Schlauch in den Vergussraum des Anschlussstück hinein reicht und dort mit einem formschlüssigen Füllelement umgeben ist, wobei der Schlauch mit einer am Außenumfang ausgeprägten Oberflächenkontur, die Erhebungen und Vertiefungen auf der Oberfläche ausbildet, ausgeformt ist, und das Anschlussstück zumindest einen Einführhohlzylinder für einen Schlauch aufweist, wobei der Einführhohlzylinder sich derart weit entlang des eingeführten Schlauches erstreckt, dass dieser mindestens zwei Erhöhungen und eine dazwischen liegende Vertiefung umschließt, wobei der Innendurchmesser d_{innenEinführöffnung} des Einführhohlzylinder größer ist als der Außendurchmesser d_{außenSchlauch} vom eingeführten Schlauch, wobei die im Einführhohlzylinder angeordneten Erhöhungen und die dazwischen liegenden Vertiefungen als teilweise ausgeprägte Labyrinth-Dichtung fungieren und ein Austreten eines Vergussmateriales verhindern. Insbesondere weist der Vergussraum ein in ihm angeordneten glatten Hohlzylinder auf, auf das das Schlauchende aufgeschoben ist, wobei der Außendurchmesser d_{außenAnschlussstück} des Hohlzylinders kleiner als oder gleich groß wie der Innendurchmesser d_{innenSchlauch} des Schlauches ist, wobei der Hohlzylinder innen hohl ist, einen Kanal bildet und den Durchfluss von Fluiden vom Schlauch zum Fluidauslass ermöglicht. Der Vergussraum kann mit dem Einführhohlzylinder über eine Durchgangsöffnung verbunden sein. Das Schlauchende kann sich vom Einführhohlzylinder aus kommend, mit mindestens 2 Wellen hinein in den Vergussraum erstreckt, wobei der Vergussraum derart ausgeführt ist, dass sich der freie Raum um das Schlauchende zumindest teilweise vom Einführhohlzylinder aus kommend in den Vergussraum vergrößert, so dass um das Schlauchende der Vergussraum einen größeren Hohlraum um das Schlauchende herum aufweist als im Einführhohlzylinder. Der Vergussraum kann zu einer weiteren Seite hin offen sein. Der Vergussraum kann mit abdichtendem Vergussmaterial ausgefüllt sein. Insbesondere bevorzugt füllt das abdichtende Vergussmaterial den Vergussraum derart aus, dass der sich in den Vergussraum hinein erstreckende Teil des Schlauches von allen Seiten umschlossen ist, wobei der Vergussraum teil- oder vollständig mit Vergussmaterial ausgefüllt ist.

Es wird auch ein Verfahren beschrieben:
Verfahren zum Ausbilden einer Fluidverbindung zwischen einem oberflächenstrukturierten Schlauch und einem Anschlussstück, wobei der Schlauch in einen Vergussraum des Anschlussstücks geschoben wird, gekennzeichnet durch Fixieren des Schlauches in dem Vergussraum mittels einer Vergussmasse am Anschlussstück und Bilden eines Formschlusses zwischen Schlauch und Vergussmasse.

Das beschriebene Verfahren kann ferner in folgenden Aspekten gekennzeichnet sein:
- fluidisches Abdichten der Verbindung mittels des Vergussmaterials
- Einschieben des Schlauchs durch einen Einführöffnung in den Vergussraum
- Füllen des Vergussraums mit Vergussmaterial
- Auswählen von Vergussmaterial, welches keine Adhäsion mit Schlauch und/oder Vergussraum eingeht
- Auswählen eines Schlauches mit einem Innendurchmesser derart, dass der Schlauch auf das Anschlussstück kraftlos, insbesondere spielfrei, aufgeschoben werden kann

Die Erfindung wird nachfolgend anhand eines in den Zeichnungen dargestellten Ausführungsbeispiels näher erläutert.

In den Zeichnungen zeigt:
- Figur 1:: Explosionszeichnung von Anschlussstück, zwei Schläuchen und Vergussmaterial
- Figur 2:: Perspektivische Ansicht von Anschlussstück und zwei eingeführte Schläuchen
- Figur 3:: Draufsicht auf Anschlussstück und zwei eingeführte Schläuchen
- Figur 4a und b:: Perspektivische Ansicht von Anschlussstück, zwei eingeführten Schläuchen und eingefülltem Vergussmaterial
- Figur 5a:: Draufsicht auf Anschlussstück, zwei Schläuchen und Vergussmaterial
- Figur 5b und c:: Schnittdarstellungen entlang Schnittverlauf A-A bzw. B-B bezogen auf Figur 5a
- Figur 6:: Vergrößerter Ausschnitt aus der Schnittdarstellung von Figur 5c

In den Figuren ist ein Ausführungsbeispiel des erfindungsgemäßen Systems mit zwei Schläuchen 10 und einem Anschlussstück gezeigt, wobei die Vorrichtung ein Scheibenwaschdüsenelement beinhaltet. Andere Ausführungsformen sind denkbar.

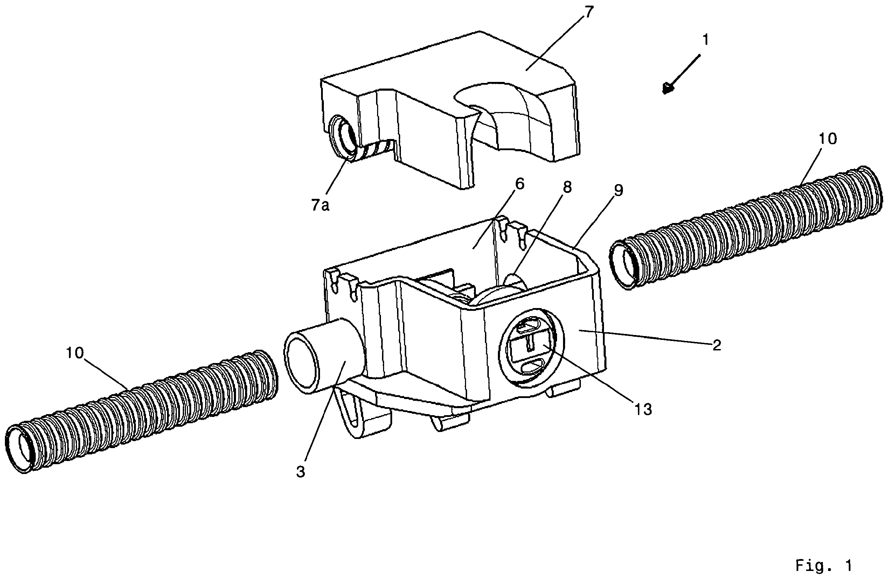

Die Figur 1 zeigt eine Explosionszeichnung der Verbindung 1 von Anschlussstück 2 und zwei Schläuchen 10 mit Hilfe von einem Füllmaterial bzw. Vergussmaterial 7. Das Vergussmaterial 7 ist in seinem festen Endzustand dargestellt. Die Figur zeigt insbesondere auch, dass der Schlauch 10 endseitig vollständig vom Vergussmaterial im Bereich 7a umschlossen ist, welches im Vergussraum 6 die Abdichtung zwischen Schlauch 10 und Anschlussstück 2 sicherstellt. Des Weiteren ist aus der Figur ein hülsenförmiger Einführhohlzylinder 3 und eine Durchgangsöffnung 8 zwischen dem Einführhohlzylinder 3 und dem Vergussraum 6 ersichtlich. Eine Einfüllöffnung 9 zum Einfüllen von Vergussmaterial 7 an der Vorrichtung 2 ist oberhalb des Vergussraumes 6 vollständig offen. Das Anschlussstück 2 weist ein Scheibenwaschdüsenelement 13 auf, das seitlich an dem Anschlussstück 2 angeordnet ist. Die Öffnungen 3a der beiden Einführhohlzylinder 3 sind auf unterschiedlichen Seiten an dem Anschlussstück 2 angeordnet.

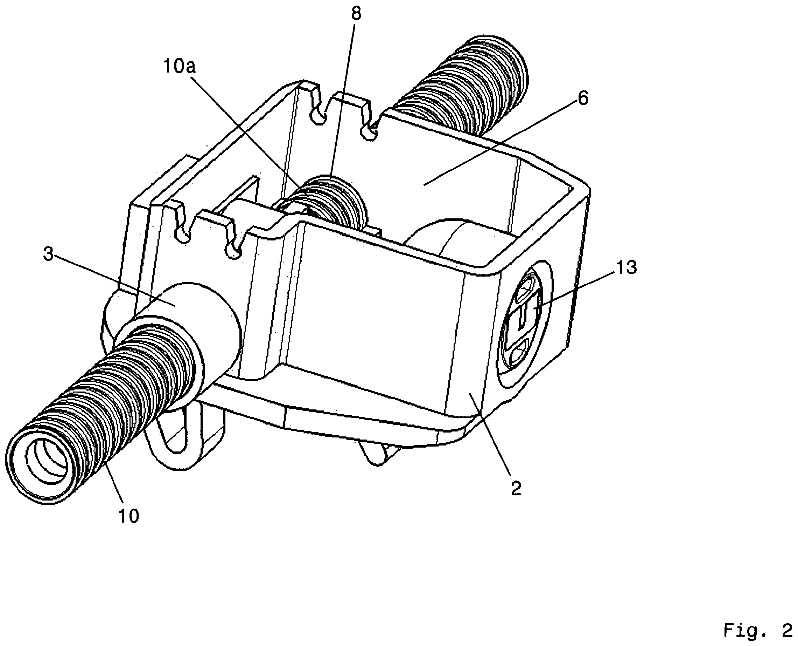

Die Figur 2 zeigt die Verbindung zwischen den zwei Schläuchen 10 und dem Anschlussstück 2 ohne das Vergussmaterial 7. Ein zentrales Element 4, hier vom Schlauch 10 verdeckt, ist erfindungsgemäß so ausgeführt, dass der Schlauch 10 auf einen Hohlzylinder des zentralen Elements 4 spielfrei aber weitgehend kraftlos aufgeschoben wird. Der Hohlzylinder des zentralen Elements 4 erstreckt sich bis in den hülsenförmigen Einführhohlzylinder 3. Damit liegt der Schlauch 10 zwischen dem Hohlzylinder und dem Einführhohlzylinder 3 und das Schlauchende 10a erstreckt sich durch die Durchgangsöffnung 8 bis in den Vergussraum 6. Die Zeichnung zeigt aufgrund der perspektivischen Darstellung auch die Scheibenwaschdüse 13.

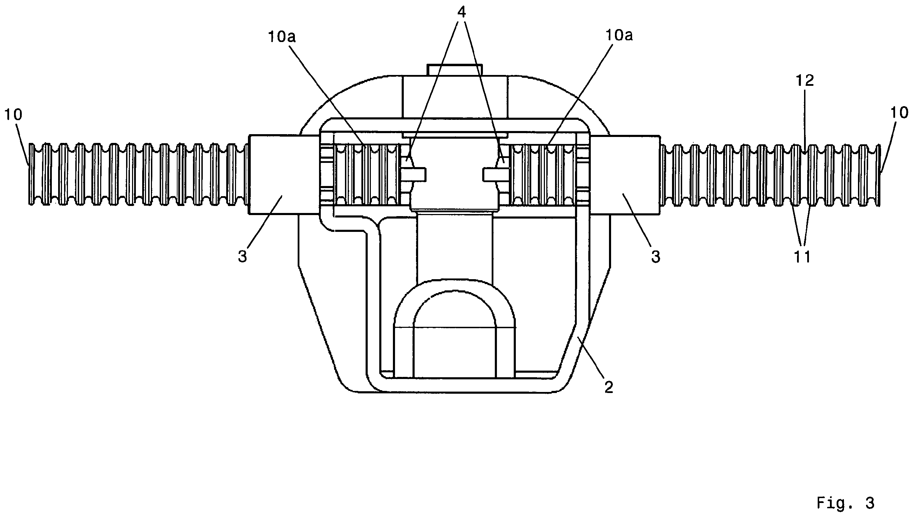

Die Figur 3 zeigt die zusammengefügten Schläuche 10 mit dem Anschlussstück 2. Die Enden der Hohlzylinder, auf die die Schläuche 10 vor dem Eingeben des Vergussmaterials 7, welches hier nicht dargestellt ist, geschoben wurden, sind erkennbar. Die Figur zeigt die Durchführung der Schläuche 10 durch die Einführhohlzylinder 3. Die Figur zeigt eine Vertiefung 12, die zwischen zwei Erhöhungen 11 auf der Oberfläche eines Schlauches 10 liegt. Im Vergussraum 6 weist jedes Schlauchende 10a drei Erhöhungen 11 und drei Vertiefungen 12 auf, so dass nach dem Einfüllen des Vergussmaterials 7 eine gut-dichtende und formschlüssig feste Verbindung vorliegt.

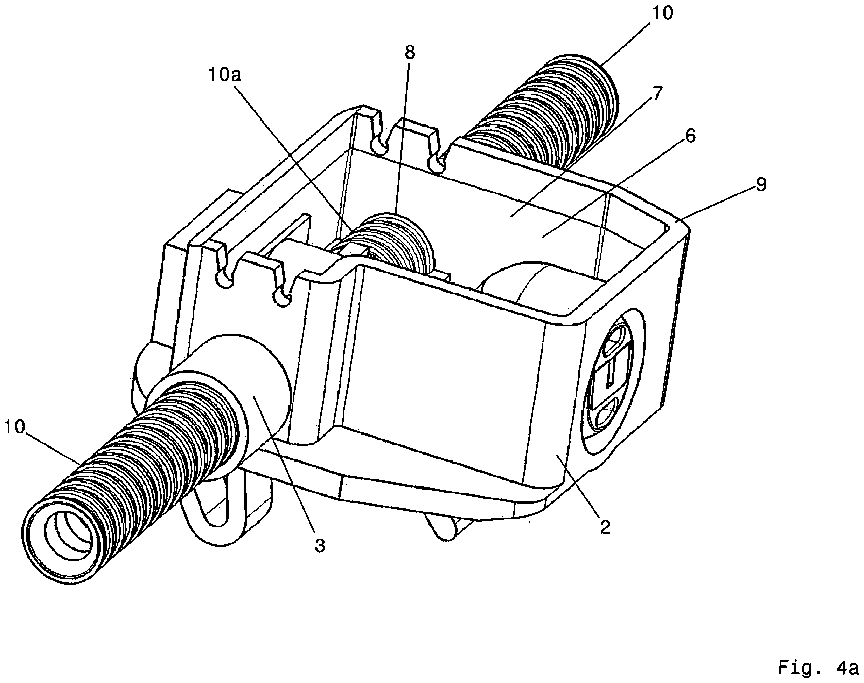

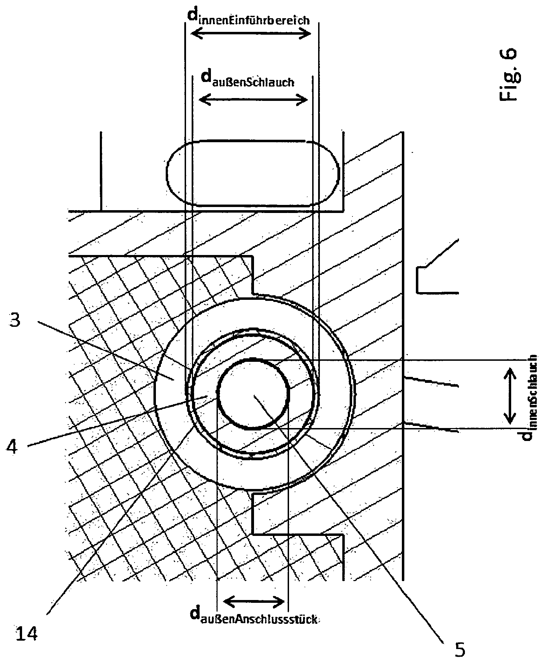

Die Figur 4a zeigt die Füllhöhe des Vergussmaterials 7 im Vergussraum 6 des Anschlussstückes 2. Das Vergussmaterial 7 wird bei der Herstellung der Verbindung von Schlauch 10 und Anschlussstück 2 von oben durch die Einfüllöffnung 9 in den Vergussraum 6 eingebracht. Dies geschieht indem flüssige Materialien eingegossen bzw. pulverförmige Materialien eingestreut werden. Dabei ist bis zum Aushärten der Vergussmaterialien 7 die Einfüllöffnung 9 oben, so dass das Vergussmaterial 7 nicht austreten kann. Nach dem erfolgten Aushärten kann das Anschlussstück 2 in jeder Lage eingebaut werden. Die transparente Darstellung des Vergussmateriales 7 ermöglicht es, die Durchgangsöffnung 8 zu sehen, durch die sich das Schlauchende 10a des Schlauches 10 in den Vergussraum 6 erstreckt. Die Figur zeigt dabei auch, dass sich der freie Raum oder auch Hohlraum um den Außenumfang des Schlauches 10a vom Einführhohlzylinder 3 aus kommend von einem Spalt 14, hier nicht dargestellt (siehe Figur 6), zu einem großen Raum, dem Vergussraum 6 erweitert. Da im Vergussraum 7 eine vollständige Umschließung mehrerer Erhöhungen 11 und das Ausfüllen der Vertiefungen 12 erfolgt, liegt eine dichtende und auch formschlüssig feste Verbindung von Schlauch 10 und Anschlussstück 2 vor.

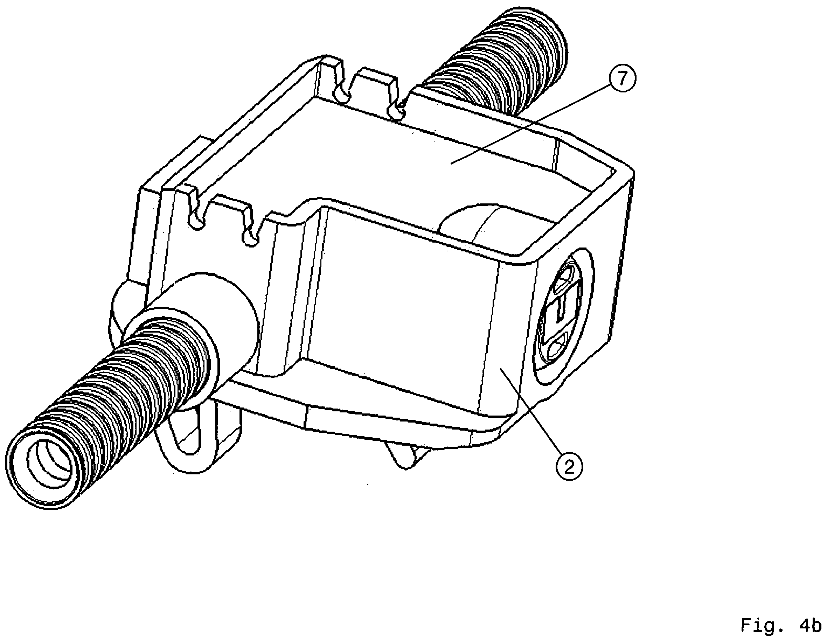

Die Figur 4b zeigt zur Vollständigkeit das nicht-transparent dargestellte eingefüllte Vergussmaterial 7 in dem Anschlussstück 2.

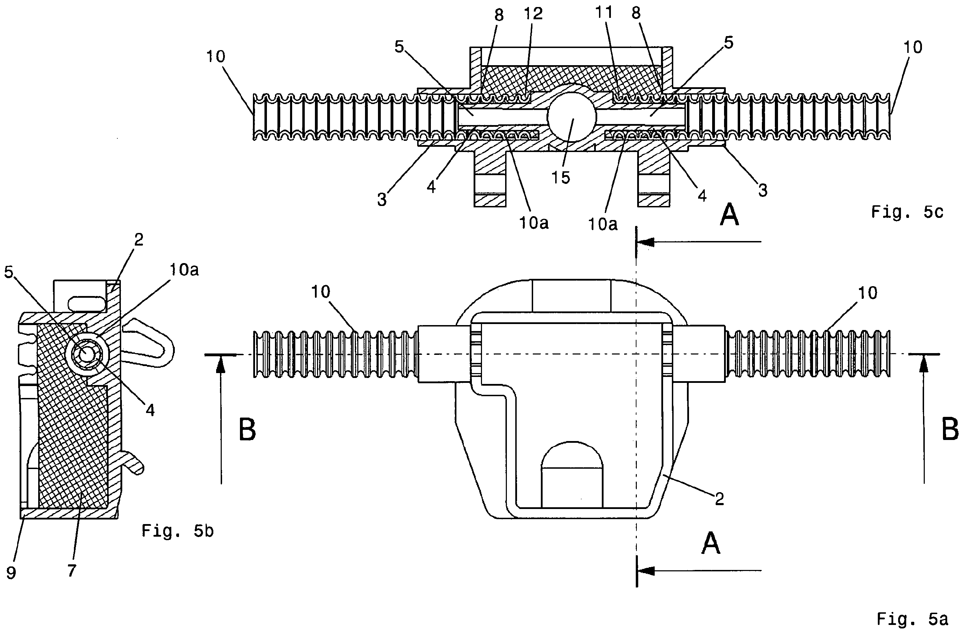

Die Figur 5a zeigt eine Draufsicht auf die Verbindung. Ersichtlich werden die Schnittverläufe A-A (Figur 5b) und B-B (Figur 5c).

Die Figur 5b zeigt den Schnittverlauf A-A bezogen auf Figur 5a. Eine vergrößerte Teilausschnittsbetrachtung ist in Figur 6 gezeigt. Die Figur zeigt das Anschlussstück 2 im Bereich des Vergussraumes 6 geschnitten. Das Vergussmaterial 7 ist zu sehen. Der Schnitt geht durch den Kanal 5 und das Schlauchende 10a. Die Einfüllöffnung 8 ist ebenso ersichtlich, wie der Umstand, dass das Vergussmaterial 7 den Schlauch 10a vollständig überdeckt.

Die Figur 5c zeigt den Schnittverlauf B-B bezogen auf Figur 5a. Das Anschlussstück 2 ist entlang des Verlaufes der Kanäle 5 der Hohlzylinder des zentralen Elements 4 geschnitten. Die Figur zeigt die Verbindung der beiden Kanäle, so dass ein Fluiddurchtritt von der einen Seite durch einen ersten Schlauch 10, den zugehörigen ersten Kanal 5 durch das Anschlussstück 2 hin zur anderen Seite durch einen zweiten Kanal 5 in den zweiten Schlauch 10 ermöglicht. Gleichzeitig ist in Zusammenschau mit Figur 3 die Verbindung zum Scheibenwaschdüsenelement 13 ersichtlich. Der Schnitt zeigt weitergehend, die Einführhohlzylinder 3 und die Durchführung der Schlauchenden 10a durch die Durchgangsöffnungen 8 in den Vergussraum 6. Der Vergussraum 6 ist mit dem Vergussmaterial 7 gefüllt. Ersichtlich ist das abdichtende Umschließen des Schlauchendes 10a durch das Vergussmaterial im Bereich 7a. Die Erhöhungen 11 und die jeweils dazwischen liegende Vertiefung 12 bilden im Einführhohlzylinder 3 eine teilweise Labyrinth-Dichtung. Teilweise deswegen, da nur die Hälfte der sog. Verkämmung einer Labyrinth-Dichtung vorhanden ist. Die Oberflächenbeschaffenheit des dargestellten Schlauches, welcher hier als Wellschlauch dargestellt ist, verhindert ein Auslaufen des Vergussmaterials 7 durch einen Spalt 14, hier nicht dargestellt (siehe Figur 6), zwischen Schlauch 10 und Oberfläche des Einführhohlzylinders 3 im Herstellungsprozess. Beim Vergießen läuft (flüssiges Vergussmaterial) bzw. rieselt (pulverförmiges Vergussmaterial) Vergussmaterial 7 je nach Viskosität einen gewissen Weg in den Spalt 14, hier nicht dargestellt (siehe Figur 6), zwischen Schlauch 10 und Innenfläche des Einführhohlzylinders 3. Dieses Vergussmaterial ist jedoch für die eigentliche Abdichtung nicht erforderlich. Das vollständige Umschließen des Schlauchendabschnittes 10a, das in den Vergussraum 6 des Anschlussstücks 2 eingeschoben ist, dichtet die Verbindung ab.

Die Figur 6 zeigt eine Vergrößerung der Schnittdarstellung aus Figur 5c. Der Hohlzylinder des zentralen Elements 4 weißt den Außendurchmesser d_{außenAnschlussstück} auf. Der Innendurchmesser des Schlauches d_{innenSchlauch} ist so ausgeführt, dass der Schlauch 10 auf den Hohlzylinder 4 spielfrei aber weitgehend kraftlos aufschiebbar ist. Der Hohlzylinder 4 erstreckt sich wiederum in den hülsenförmigen Einführhohlzylinder 3. Der Einführhohlzylinder 3 hat den Innendurchmesser d_{innenEinführöffnung}. Damit liegt das Schlauchende des Schlauches 10 zwischen dem Hohzylinder des zentralen Elements 4 und dem Einführhohlzylinder 3, wobei der Schlauch 10 den Außendurchmesser d_{außenSchlauch} aufweist. Der Außendurchmesser d_{außenSchlauch} ist dabei geringer als der Innendurchmesser d_{innenEinführöffnung} des Einführhohlzylinders 3. Somit kann ggf. eine geringe Menge Vergussmaterial 7, hier nicht dargestellt, in den Spalt 14 zwischen Schlauch 10 und der Innenwand der Einführöffnung 3 treten.

Das oben beschriebe Aushärten des Vergussmaterials kann eine Wärmebehandlung notwendig gemacht haben, wie es bei pulverförmigem Vergussmaterial der Fall wäre, oder kann optional zum Einsatz gekommen sein. Wichtig dabei ist, dass weder Schlauch noch Anschlussstück dadurch weder punktuell geschwächt oder bereichsweise beschädigt werden.

Andere Ausführungsformen sind denkbar. So ist ebenso ein Verbinden von einem Schlauch mit nur einem anderen Element möglich, hier aber nicht dargestellt. Auch ist es möglich mit der oben beschriebenen Art einen Verteiler für Fluide auszubilden bei dem z.B. drei und mehr Schläuche auf ein Anschlussstück treffen.

Die voranstehend beschriebenen Figuren zeigen eine beispielhafte Ausgestaltung eines Anschlussstückes 2 für zwei Schläuche 10 in welches zusätzlich ein Scheibenwaschdüsenelement 13 integriert ist. Dies kann z.B. verwendet werden um eine Düsenkette, bestehende aus mehreren Anschlussstücken, mit integrierten Düsen und dazwischen liegenden Schläuchen herzustellen.

Alternativ kann der Verbindungsprozess dahingehend erweitert werden, diesen mit den bei beheizten Scheibenwaschdüsen ohnehin notwendigen Vergussprozess zu kombinieren (nicht dargestellt). Somit kann neben dem Vergießen der Heizungselemente für die Düsen die Schlauchenden auf den Anschlussstücken mit eingegossen werden. Ein Eingießen der Schlauchenden ist jedoch auch unabhängig von den Heizungen möglich.

## Patentansprüche

1. Anschlussstück (2) zum Verbinden eines oberflächenstrukturierten, mindestens eine Vertiefung in seiner Oberfläche aufweisenden Endes eines sich entlang einer Längsrichtung erstreckenden Schlauchs (10) mit einem Fluidauslass, **gekennzeichnet durch** einen Vergussraum (6), in den das Ende des Schlauchs (10) eingebracht werden kann, und ein in dem Vergussraum (6) angeordnetes Vergussmaterial (7), das
• in einem ersten Verarbeitungszustand hinreichend fluidisierbar ist, damit ein Teil des im Vergussraum (6) befindlichen Vergussmaterials (7) bei eingeschobenem Ende des Schlauchs (10) in die Vertiefung fließen kann, und
• in einem zweiten Verarbeitungszustand aushärtbar ist, damit der in die Vertiefung eingeflossene Teil des Vergussmaterials (7) und der übrige Teil des Vergussmaterials (7) das Ende des Schlauchs (10) durch das Eingreifen des Vergussmaterials (7) in die Vertiefung formschlüssig gegen entlang der Längsachse des Schlauchs wirkende Zugkräfte in dem Vergussraum (6) zurückhalten können, so dass der Schlauch (10) an dem Anschlussstück (2) fixiert ist.

2. Anschlussstück nach Anspruch 1, **gekennzeichnet durch** einen in dem Vergussraum (6) angeordneten Hohlzylinder, auf den das Ende des Schlauches (10) aufschiebbar ist, wobei der Hohlzylinder einen endseits offenen Fluidkanal aufweist, der mit dem Fluidauslass verbunden ist.

3. Anschlussstück nach Anspruch 2 **dadurch gekennzeichnet, dass** das Vergussmaterial (7) derart ausgebildet ist, dass das Vergussmaterial (7) die Verbindung zwischen dem Ende des Schlauchs (10) und dem Hohlzylinder fluidisch abdichtet, und insbesondere das Vergussmaterial (7) am Stirnbereich des Ende des Schlauchs (10) anliegt.

4. Anschlussstück nach einem der Ansprüche 1 bis 3, **dadurch gekennzeichnet, dass** der Vergussraum (6) eine Anlagefläche für das Vergussmaterial (7) umfasst, die eine Flächennormale aufweist, die mit der Einschubrichtung des Endes des Schlauches (10) in den Vergussraum (6) einen Winkel von ungefähr 0° bis ungefähr 45° einschließt.

5. Anschlussstück nach einem der voranstehenden Ansprüche, **dadurch gekennzeichnet, dass** das der Vergussraum (6) fluidisch mittels eines Kanals (5) mit dem als Scheibenwaschdüsenelement (13) ausgebildeten Fluidauslass verbunden ist.

6. Anschlussstück nach einem der voranstehenden Ansprüche, **dadurch gekennzeichnet, dass** der Vergussraum (6) eine Einfüllöffnung (9) für Vergussmaterial (7) aufweist, die offen oder durch einen Deckel verschließbar ist.

7. Anschlussstück nach einem der voranstehenden Ansprüche, **dadurch gekennzeichnet, dass** das Vergussmaterial (7) ein Material ist, das keine Adhäsion mit den den Vergussraum (6) begrenzenden Wänden eingeht.

8. Anschlussstück nach einem der voranstehenden Ansprüche, **gekennzeichnet durch** eine erste Einführöffnung, über die ein Ende eines ersten Schlauchs (10) in den Vergussraum (6) eingeführt werden kann, und eine zweite Einführöffnung, über die ein Ende eines zweiten Schlauchs (10) in den Vergussraum (6) eingeführt werden kann.

9. System aus einem Anschlussstück (2) nach einem der Ansprüche 1 bis 8 und einem eine Vertiefung in seiner Oberfläche aufweisenden Endes eines sich entlang einer Längsrichtung erstreckenden Schlauchs (10), **dadurch gekennzeichnet, dass** die Vergussmasse (7) ausgehärtet ist und der in die Vertiefung eingeflossene Teil des Vergussmaterials (7) und der übrige Teil des Vergussmaterials (7) das Ende des Schlauchs (10) formschlüssig gegen entlang der Längsachse des Schlauchs wirkende Zugkräfte in dem Vergussraum (6) zurückhalten und der Schlauch (10) an dem Anschlussstück (2) fixiert ist.

10. System nach Anspruch 9, **dadurch gekennzeichnet, dass** am Ende des Schlauchs (10) mehrere Vertiefungen als parallele ringförmige Vertiefungen ausgebildet sind.

11. System nach Anspruch 9, **dadurch gekennzeichnet, dass** am Ende des Schlauchs (10) die Vertiefung als spiralförmige Vertiefung ausgebildet ist.

12. System nach einem der Ansprüche 9 bis 11, **dadurch gekennzeichnet, dass** der Schlauch (10) ein Wellschlauch ist.

13. System nach einem der Ansprüche 9 bis 12, **dadurch gekennzeichnet, dass** ein Teil des Schlauches (10) einen unflexiblen Rohrbereich aufweist.

14. System nach einem der Ansprüche 9 bis 13, **dadurch gekennzeichnet, dass** das Vergussmaterial (7) ein Material ist, das keine Adhäsion der Oberfläche des Schlauchs (10) eingeht.

15. Verwendung des Systems nach einem der Ansprüche 9 bis 14 zum Verbinden des Schlauchs mit einem Scheibenwaschdüsenelement (13).

## Claims

1. Connection piece (2) for connecting a surface-structured end of a hose (10) extending along a longitudinal direction, having at least one recess in its surface, with a fluid outlet, **characterised by** a casting space (6), into which the end of the hose (10) can be inserted, and a casting material (7) arranged in the casting space (6), which
• can be sufficiently fluidised in a first processing condition, so that a part of the casting material (7) located in the casting space (6) can flow into the recess when the end of the hose (10) is inserted, and
• can be cured in a second processing condition, so that the part of the casting material (7) that has flowed into the recess and the remaining part of the casting material (7) can hold back the end of the hose (10) by positively engaging the casting material (7) in the recess against traction forces acting along the longitudinal axis of the hose in the casting space (6), so that the hose (10) is fixed to the connection piece (2).

2. Connection piece according to claim 1, **characterised by** a hollow cylinder arranged in the casting space (6), onto which the end of the hose (10) can be pushed, wherein the hollow cylinder has a fluid channel open at the end, which is connected with the fluid outlet.

3. Connection piece according to claim 2, **characterised in that** the casting material (7) is designed in such a way that the casting material (7) seals the connection between the end of the hose (10) and the hollow cylinder in a fluid tight way, and in particular that the casting material (7) lies against the facing area of the end of the hose (10).

4. Connection piece according to any of claims 1 to 3, **characterised in that** the casting space (6) comprises an abutment surface for the casting material (7), which has a surface normal that encloses an angle of around 0° to around 45° with the insertion direction of the end of the hose (10) into the casting space (6).

5. Connection piece according to any of the preceding claims, **characterised in that** the casting space (6) is in fluid connection with the fluid outlet designed as a windscreen washer nozzle element (13) by means of a channel (5).

6. Connection piece according to any of the preceding claims, **characterised in that** the casting space (6) has a filler opening (9) for casting material (7), which is open or can be closed with a lid.

7. Connection piece according to any of the preceding claims, **characterised in that** the casting material (7) is a material that does not enter into adhesion with the walls delimiting the casting space (6).

8. Connection piece according to any of the preceding claims, **characterised by** a first insertion opening, through which an end of the first hose (10) can be inserted into the casting space (6), and a second insertion opening, through which an end of the second hose (10) can be inserted into the casting space (6).

9. System comprising of a connection piece (2) according to any of the claims 1 to 8 and an end of a hose (10) extending along a longitudinal direction, having a recess in its surface, **characterised in that** the casting mass (7) is cured and the part of the casting material (7) that has flowed into the recess and the remaining part of the casting material (7) can hold back the end of the hose (10) positively against traction forces acting along the longitudinal axis of the hose in the casting space (6) and the hose (10) is fixed to the connection piece (2).

10. System according to claim 9, **characterised in that** several recesses are designed as parallel annular recesses at the end of the hose (10).

11. System according to claim 9, **characterised in that** the recess is designed as a helical recess at the end of the hose (10).

12. System according to any of claims 9 to 11, **characterised in that** the hose (10) is a corrugated hose.

13. System according to any of claims 9 to 12, **characterised in that** a part of the hose (10) has a non-flexible pipe area.

14. System according to any of claims 9 to 13, **characterised in that** the casting material (7) is a material that does not enter into adhesion with the surface of the hose (10).

15. Use of the system according to any of claims 9 to 14 for connecting the hose with a windscreen washer nozzle element (13).

## Revendications

1. Pièce de raccordement (2) servant à relier une extrémité, dont la surface est structurée et qui comporte au moins un renfoncement à sa surface, d'un tuyau flexible (10) s'étendant le long d'une direction longitudinale à une sortie de fluide, **caractérisée en ce qu'**un espace d'encapsulation (6), dans lequel l'extrémité du tuyau flexible (10) peut être introduite, et un matériau d'encapsulation (7) disposé dans l'espace d'encapsulation (6), qui
• peut être rendu suffisamment fluide dans un premier état de transformation afin qu'une partie du matériau d'encapsulation (7) se trouvant dans l'espace d'encapsulation (6) puisse s'écouler dans le renfoncement lorsque l'extrémité du tuyau flexible (10) est insérée, et
• peut être durci dans un deuxième état de transformation afin que la partie du matériau d'encapsulation (7) qui s'est écoulée dans le renfoncement et la partie restante du matériau d'encapsulation (7) puissent retenir dans l'espace d'encapsulation (6) l'extrémité du tuyau flexible (10) par complémentarité de forme à l'encontre de forces de traction agissant le long de l'axe longitudinal du tuyau flexible grâce à la prise du matériau d'encapsulation (7) avec le renfoncement de telle sorte que le tuyau flexible (10) soit fixé à la pièce de raccordement (2).

2. Pièce de raccordement selon la revendication 1, **caractérisée** en un cylindre creux disposé dans l'espace d'encapsulation (6) sur lequel l'extrémité du tuyau flexible (10) peut être glissée, le cylindre creux présentant un canal de fluide ouvert à son extrémité qui est relié à la sortie de fluide.

3. Pièce de raccordement selon la revendication 2, **caractérisée en ce que** le matériau d'encapsulation (7) est formé de telle sorte que le matériau d'encapsulation (7) étanche fluidiquement la liaison entre l'extrémité du tuyau flexible (10) et le cylindre creux, et notamment le matériau d'encapsulation (7) sur la zone frontale de l'extrémité du tuyau flexible (10).

4. Pièce de raccordement selon l'une quelconque des revendications 1 à 3, **caractérisée en ce que** l'espace d'encapsulation (6) comprend une surface d'appui pour le matériau d'encapsulation (7) qui comprend une normale à la surface qui inclut un angle d'environ 0° à environ 45° avec la direction d'insertion de l'extrémité du tuyau flexible (10) dans l'espace d'encapsulation (6).

5. Pièce de raccordement selon l'une des revendications précédentes, **caractérisée en ce que** l'espace d'encapsulation (6) est relié fluidiquement à la sortie de fluide formée comme l'élément de buse de lave-glace (13) via un canal (5).

6. Pièce de raccordement selon l'une des revendications précédentes, **caractérisée en ce que** l'espace d'encapsulation (6) présente un orifice de remplissage (9) pour le matériau d'encapsulation (7) qui est ouvert ou fermé par un couvercle.

7. Pièce de raccordement selon l'une des revendications précédentes, **caractérisée en ce que** le matériau d'encapsulation (7) est un matériau qui n'adhère pas aux parois limitant l'espace d'encapsulation (6).

8. Pièce de raccordement selon l'une des revendications précédentes, **caractérisée** en un premier orifice d'introduction par lequel une extrémité d'un premier tuyau flexible (10) peut être introduite dans l'espace d'encapsulation (6) et en un deuxième orifice d'introduction par lequel une extrémité d'un deuxième tuyau flexible (10) peut être introduite dans l'espace d'encapsulation (6).

9. Système comportant une pièce de raccordement (2) selon l'une quelconque des revendications 1 à 8 et un renfoncement à sa surface, d'un tuyau flexible (10) s'étendant le long d'une direction longitudinale, **caractérisé en ce que** le matériau d'encapsulation (7) est durci ainsi que la partie du matériau d'encapsulation (7) qui s'est écoulée dans le renfoncement et la partie restante du matériau d'encapsulation (7) retenant dans l'espace d'encapsulation (6) l'extrémité du tuyau flexible (10) par complémentarité de forme à l'encontre de forces de traction agissant le long de l'axe longitudinal du tuyau flexible de telle sorte que le tuyau flexible (10) soit fixé à la pièce de raccordement (2).

10. Système selon la revendication 9, **caractérisé en ce que** plusieurs renfoncements sont formés à l'extrémité du tuyau flexible (10) comme des renfoncements annulaires parallèles.

11. Système selon la revendication 9, **caractérisé en ce que** le renfoncement est formé à l'extrémité du tuyau flexible (10) comme un renfoncement en forme de spiral.

12. Système selon l'une quelconque des revendications 9 à 11, **caractérisé en ce que** le tuyau flexible (10) est un tuyau flexible ondulé.

13. Système selon l'une quelconque des revendications 9 à 12, **caractérisé en ce qu'**une partie du tuyau flexible (10) présente une zone de tuyau non flexible.

14. Système selon l'une quelconque des revendications 9 à 13, **caractérisé en ce que** le matériau d'encapsulation (7) est un matériau qui n'adhère pas à la surface du tuyau flexible (10).

15. Utilisation du système selon l'une quelconque des revendications 9 à 14 en vue de relier le tuyau flexible à un élément de buse de lave-glace (13).
